# EUROPEAN PATENT APPLICATION

(11) **EP 4 640 497 A1**
(43) Date of publication of application: **29.10.2025**
(21) Application number: 23907097.2
(22) Date of filing: 20.12.2023
(51) Int. Cl.: B60R 21/215, C08L 21/00, C08L 23/08, C08L 23/10, C08L 53/02

(54) **AIRBAG STORAGE COVER AND THERMOPLASTIC ELASTOMER COMPOSITION FOR AIRBAG STORAGE COVER**

(30) Priority: 21.12.2022 JP 2022204498
(71) Applicant: MCPP Innovation LLC, Tokyo 100-8251 (JP)
(72) Inventor: KINOSHITA, Yuma, Tokyo 100-8251 (JP); MATSUMOTO, Seiji, Tokyo 100-8251 (JP)
(74) Representative: Vossius & Partner Patentanwälte Rechtsanwälte mbB
(86) International application number: PCT/JP2023/045729
(87) International publication number: WO 2024/135737

(57) **Abstract**

An airbag housing cover made of a thermoplastic elastomer composition comprising a propylene-based polymer, an elastomer, and a colorant, wherein the thermoplastic elastomer composition has a total light transmittance of 0.001% or more and 70% or less as measured by the following method.

<Method of measuring the total light transmittance>

The thermoplastic elastomer composition is injection molded under conditions of a resin temperature of 200°C and a mold temperature of 40°C to produce a sheet-like test piece having a thickness of 1 mm. The total light transmittance of the test piece is measured according to JIS K7136-1.

## Description

### Technical Field

The present invention relates to an airbag housing cover having appropriate light transmittance and light diffusibility, and a thermoplastic elastomer composition for the same.

The present invention also relates to a molded article and a composite molded article using this thermoplastic elastomer composition for airbag housing cover.

### Background Art

An automotive airbag system is a system that protects a driver and a passenger in the event of a car collision, and consists of a device for detecting an impact of a collision and an airbag device. An airbag device is installed in a steering wheel, an instrument panel in front of a front passenger seat, a driver's seat and a front passenger seat, front and side pillars, or the like.

When an airbag of an airbag device is inflated, an airbag housing cover of the airbag device has a possibility that that the cover is destroyed and broken pieces thereof scatter, or a possibility that the cover will scatter due to destruction of a cover mounting portion of the airbag device. For this reason, various proposals have been made regarding the structure and material for the purpose of preventing the cover from being abnormally destroyed and scattered.

In the case where a deployment output of an airbag device is increased, an airbag housing cover thereof has a possibility that it is injured during deploying at a low or high temperature. Therefore, from the viewpoints of enhanced safety and freedom of design, there is a demand for developing a material of a thermoplastic elastomer composition having a high low-temperature impact resistance and a high high-temperature strength.

As such a thermoplastic elastomer composition for an airbag housing cover, a thermoplastic elastomer composition comprising a propylene-based resin as a hard segment and an olefin-based rubber such as ethylene-propylene elastomer (EPDM, EPR, and the like) or a styrene-based elastomer as a soft segment are known (Patent Literatures 1,2).

### Citation List

### Patent Literature

Patent Literature 1: JP 2019-38925 A
Patent Literature 2: JP 2020-158615 A

### Summary of Invention

### Technical Problem

In recent years, there is a design that incorporates a function as a touch panel display into a part of an airbag housing cover. This type of airbag housing cover is composed of a surface layer made of a film that serves as an interface for a touch panel display, and an airbag housing cover layer provided so as to be in contact with the surface layer. A light source such as an LED module and the like that lights up is embedded inside the airbag housing cover. In such a configuration, the airbag housing cover needs to be made of a material that transmits light so that a user can easily see the lighting of the light source. Therefore, the thermoplastic elastomer composition used for the airbag housing cover layer has been becoming necessary to have light transmittance to the extent that the user can visually recognize the lighting of the light source, in addition to the low-temperature impact resistance and the high-temperature strength that are conventionally required. On the other hand, from the viewpoint of design, a degree of light transmission that does not allow the airbag stored in the airbag housing cover to be clearly seen is desired.

According to studies by the present inventors, the thermoplastic elastomer compositions used in the airbags described in Patent Literature 1 and Patent Literature 2 have good low-temperature impact resistance and high-temperature strength, but dose not intend to have appropriate light transmittance as described above, and therefore the light transmission and light diffusibility are not sufficiently controlled.

An object of the present invention is to provide an airbag housing cover that has appropriate light transmission and light diffusibility when irradiated with light. Solution to Problem

The present inventors have found that it is possible to provide an airbag housing cover having appropriate light transmittance and light diffusibility, by controlling the total light transmittance of a thermoplastic elastomer composition containing a propylene-based polymer, an elastomer, and a colorant to fall within a desired range, and have completed the present invention.

Specifically, a summary of the present invention lies in the following [1] to [31].

[1] An airbag housing cover made of a thermoplastic elastomer composition comprising a propylene-based polymer, an elastomer, and a colorant,
   wherein the thermoplastic elastomer composition has a total light transmittance of 0.001% or more and 70% or less as measured by the following method.

### <Method of measuring the total light transmittance>

The thermoplastic elastomer composition is injection molded under conditions of a resin temperature of 200°C and a mold temperature of 40°C to produce a sheet-like test piece having a thickness of 1 mm. The total light transmittance of the test piece is measured according to JIS K7136-1.
[2] The airbag housing cover according to [1], wherein the thermoplastic elastomer composition has an Izod impact strength at -40°C according to ISO180 of 50 kJ/m² or more.
[3] The airbag housing cover according to [1] or [2], wherein the thermoplastic elastomer composition comprises the propylene-based block copolymer as the propylene-based polymer.
[4] The airbag housing cover according to [3], wherein the propylene-based block copolymer has a propylene-based polymer component and an ethylene-propylene copolymer component.
[5] The airbag housing cover according to any one of [1] to [4], wherein the airbag housing cover is for being arranged at a visible position.
[6] The airbag housing cover according to [5], wherein the airbag housing cover is for being arranged on an instrument panel, a steering wheel, or a console panel.
[7] The airbag housing cover according to any one of [1] to [6], wherein the thermoplastic elastomer composition comprises at least one selected from the group consisting of a styrene-based elastomer and an ethylene-α-olefin copolymer as the elastomer.
[8] The airbag housing cover according to [7], wherein the thermoplastic elastomer composition comprises the styrene-based elastomer as the elastomer.
[9] The airbag housing cover according to [8], wherein the styrene-based elastomer comprises a hydrogenated product of a styrene-conjugated diene block copolymer (b1) having a styrene unit content of 10% by mass or more and 15% by mass or less, and a hydrogenated product of a styrene-conjugated diene block copolymer (b2) having a styrene unit content of 25% by mass or more and 35% by mass or less.
[10] The airbag housing cover according to any one of [7] to [9], wherein the styrene-based elastomer has a glass transition temperature of -65°C or higher and -45°C or lower.
[11] The airbag housing cover according to [7], wherein the thermoplastic elastomer composition comprises the ethylene-α-olefin copolymer as the elastomer.
[12] The airbag housing cover according to any one of [1] to [11], wherein the colorant is at least one selected from the group consisting of an organic pigment and an inorganic pigment.
[13] The airbag housing cover according to [12], wherein the thermoplastic elastomer composition comprises 0.01 parts by mass or more and 5 parts by mass or less of the organic pigment as the colorant relative to 100 parts by mass of the total of the propylene-based polymer and the elastomer.
[14] The airbag housing cover according to [12], wherein the thermoplastic elastomer composition comprises 0.001 parts by mass or more and 0.5 parts by mass or less of the inorganic pigment as the colorant relative to 100 parts by mass of the total of the propylene-based polymer and the elastomer.
[15] The airbag housing cover according to [12], wherein the thermoplastic elastomer composition comprises 0.001 parts by mass or more and 3 parts by mass or less of the organic pigment and the inorganic pigment in total as the colorant relative to 100 parts by mass of the propylene-based polymer and the elastomer in total.
[16] The airbag housing cover according to any one of [1] to [15], wherein the thermoplastic elastomer composition has a melt flow rate of 1.0g/10min or more and 50g/10min or less at a temperature of 230°C and a measurement load of 21.18N according to JIS K7210 (1999).
[17] The airbag housing cover according to any one of [1] to [16], wherein the thermoplastic elastomer composition comprises the elastomer in an amount of 45 parts by mass or more and 250 parts by mass or less relative to 100 parts by mass of the propylene-based copolymer.
[18] The airbag housing cover according to any one of [1] to [17], wherein the airbag housing cover has the total light transmittance of 0.001% or more and 20% or less.
[19] A thermoplastic elastomer composition for an airbag housing cover comprising a propylene-based polymer, an elastomer, and a colorant,
   wherein the elastomer is at least one selected from the group consisting of a styrene-based elastomer and an ethylene-α-olefin copolymer,
   the colorant is at least one selected from the group consisting of an organic pigment and an inorganic pigment, and
   the thermoplastic elastomer composition has a total light transmittance of 0.001% or more and 70% or less measured by the following method.

### <Method of measuring the total light transmittance>

The thermoplastic elastomer composition is injection molded under conditions of a resin temperature of 200°C and a mold temperature of 40°C to produce a sheet-like test piece having a thickness of 1 mm. The total light transmittance of the test piece is measured according to JIS K7136-1.
[20] The thermoplastic elastomer composition for an airbag housing cover according to [19], comprising 0.01 parts by mass or more and 5 parts by mass or less of the organic pigment as the colorant relative to 100 parts by mass of the total of the propylene-based polymer and the elastomer.
[21] The thermoplastic elastomer composition for an airbag housing cover according to [19], comprising 0.001 parts by mass or more and 0.5 parts by mass or less of the inorganic pigment as the colorant relative to 100 parts by mass of the total of the propylene-based polymer and the elastomer.
[22] The thermoplastic elastomer composition for an airbag housing cover according to [19], comprising 0.001 parts by mass or more and 3 parts by mass or less of the organic pigment and the inorganic pigment in total as the colorant relative to 100 parts by mass of the propylene-based polymer and the elastomer in total.
[23] The thermoplastic elastomer composition for an airbag housing cover according to any one of [19] to [22], comprising the styrene-based elastomer as the elastomer.
[24] The thermoplastic elastomer composition for an airbag housing cover according to [23], wherein the styrene-based elastomer comprises a hydrogenated product of a styrene-conjugated diene block copolymer (b1) having a styrene unit content of 10% by mass or more and 15% by mass or less, and a hydrogenated product of a styrene-conjugated diene block copolymer (b2) having a styrene unit content of 25% by mass or more and 35% by mass or less.
[25] The thermoplastic elastomer composition for an airbag housing cover according to [23] or [24], wherein the styrene-based elastomer has a glass transition temperature of -65°C or higher and -45°C or lower.
[26] The thermoplastic elastomer composition for an airbag housing cover according to any one of [19] to [25], wherein the propylene-based polymer comprises the propylene-based block copolymer.
[27] The thermoplastic elastomer composition for an airbag housing cover according to [26], wherein the propylene-based block copolymer has a propylene-based polymer component and an ethylene-propylene copolymer component.
[28] The thermoplastic elastomer composition for an airbag housing cover according to any one of [19] to [22], [26] and [27], wherein the elastomer comprises the ethylene-α-olefin copolymer.
[29] A molded article made of the thermoplastic elastomer composition according to any one of [19] to [28].
[30] A composite molded article having a first layer containing the thermoplastic elastomer composition according to any one of [19] to [28] and a second layer made of a resin film.
[31] The composite molded article according to [30], wherein the composite molded article is an airbag housing cover.

### Advantageous Effects of Invention

According to the present invention, it is possible to provide an airbag housing cover that has appropriate light transmission and light diffusibility when irradiated with light.

The airbag housing cover of the present invention includes a driver airbag housing cover, a front passenger airbag housing cover, a pedestrian airbag housing cover, a knee airbag housing cover, a side airbag housing cover, and a curtain airbag housing cover. It can be suitably used for any of bag housing covers and the like.

In particular, the airbag housing cover of the present invention is suitable as an airbag housing cover incorporating a touch panel display due to its appropriate light transmission and light diffusibility and suitability for combination with a touch panel film.

### Brief Description of Drawings

[Fig. 1] Fig. 1 is a schematic diagram showing an example of an airbag housing cover, where Fig. 1(a) is a front view and Fig. 1(b) is a rear view.
[Fig. 2] Fig. 2 is a schematic diagram showing the direction of light transmission direction from a light source to an airbag housing cover, and is an enlarged view of the cross section along line II-II in Fig. 1(a).

### Description of Embodiments

The present invention will be described in detail below. The present invention is not limited to the following description and can be modified and practiced in any manner that is consistent with the scope of the present invention.

### [Thermoplastic Elastomer Composition]

First, the thermoplastic elastomer composition according to the present invention will be explained.

The thermoplastic elastomer composition constituting the airbag housing cover of the present invention (hereinafter, sometimes referred to as the "thermoplastic elastomer composition of the present invention") is a thermoplastic elastomer composition containing a propylene-based polymer, an elastomer, and a colorant, and has a total light transmittance of 0.001% or more and 70% or less as measured by the following method.

### <Method of measuring the total light transmittance>

The thermoplastic elastomer composition is injection molded under conditions of a resin temperature of 200°C and a mold temperature of 40°C to produce a sheet-like test piece having a thickness of 1 mm. The total light transmittance of the test piece is measured according to JIS K7136-1.

### <Mechanism>

The thermoplastic elastomer composition constituting the airbag housing cover of the present invention has appropriate light transmittance when irradiated with light. It also has the effect of being suitable for compounding with a touch panel film.

Although the details of why the thermoplastic elastomer composition of the present invention exhibits such effects are not fully clear, the following is presumed as the reason why such effects are exhibited.

Propylene-based polymers and elastomers have been used to control the various properties required for airbag housing covers, such as moldability, low-temperature impact resistance, and high-temperature strength, and also affect the light transmittance of the airbag housing cover. Propylene-based polymers tend to act in the direction of decreasing light transmittance, while elastomers tend to act in the direction of increasing light transmittance. Here, by blending a colorant that acts to reduce light transmittance in a well-balanced manner in addition to the propylene-based copolymer and elastomer, it is possible to control the light transmittance of the thermoplastic elastomer composition and, furthermore the airbag housing cover, while providing the various properties required for the airbag housing cover, such as moldability, low-temperature impact resistance, and high-temperature strength.

The thermoplastic elastomer composition of the present invention that constitutes the airbag housing cover of the preferred embodiment has excellent light diffusibility when irradiated with light. Therefore, the light from the light source is diffused and does not pass through linearly, and glare is suppressed in terms of visibility. In addition, the shape of the light source is not visible, so the design is also excellent. For these reasons, the airbag housing cover of the present invention has the effect of being suitable for compounding with a touch panel film.

### <Propylene-based polymer>

The propylene-based polymer used in the thermoplastic elastomer composition of the present invention is one in which propylene units are the main component of the total monomer units in the propylene-based polymer. The lower limit of the propylene unit content of the propylene-based polymer is usually 50% by mass or more, and from the viewpoints of heat resistance and rigidity, it is preferably 85% by mass or more, and more preferably 90% by mass or more. On the other hand, although there is no particular limit to the upper limit of the propylene unit content of the propylene-based polymer, from the viewpoint of low-temperature impact resistance, it is preferably 98% by mass or less, and more preferably 97% by mass or less.

The content of the propylene units in the propylene-based polymer can be determined by infrared spectroscopy.

The propylene-based polymer is distinguished from the ethylene-α-olefin copolymer as an elastomer described below by having propylene units as the main component.

The propylene-based polymer may be either a propylene homopolymer or a propylene copolymer.

The propylene copolymer contains, in addition to propylene units, ethylene units, α-olefin units other than propylene, monomer units other than ethylene and α-olefins, and the like, preferably in an amount of 15% by mass or less, and more preferably in an amount of 10% by mass or less.

The propylene copolymer may be a propylene-based random copolymer or a propylene-based block copolymer.

In the present invention, from the viewpoint of light transmittance, a propylene-based random copolymer is preferred as the propylene copolymer.

Examples of α-olefin of α-olefin units other than propylene contained in the propylene-based random copolymer include α-olefins having 4 or more and 20 or less carbon atoms. Examples of α-olefins having 4 or more and 20 or less carbon atoms include 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 4- methyl-1-pentene, 2-ethyl-1-hexene, 2,2,4-trimethyl-1-pentene and the like. Preferred are α-olefins having 4 or more and 10 or less carbon atoms, and more preferred are 1-butene, 1-hexene and 1-octene.

The propylene-based random copolymer may contain only one type of these α-olefin units and ethylene units, or may contain two or more types.

Specific examples of propylene-based random copolymers include propylene-ethylene copolymers, propylene-1-butene copolymers, propylene-1-hexene copolymers, propylene-1-octene copolymers, propylene-ethylene-1-butene copolymers, propylene-ethylene-1-hexene copolymers, and propylene-ethylene-1-octene copolymers.

Among these, copolymers of propylene and at least one monomer selected from ethylene and α-olefins having 4 or more and 10 or less carbon atoms are preferred.

For producing the propylene-based random copolymer, various polymerization methods known in the related art in which a known catalyst for polymerization of olefins is used may be used. For example, a multi-stage polymerization method using a Ziegler-Natta catalyst can be mentioned. As the multi-stage polymerization method, a slurry polymerization method, a solution polymerization method, a bulk polymerization method, a gas phase polymerization method, or the like can be used, and two or more of these methods may be combined.

In the present invention, the propylene-based copolymer is preferably a propylene-based block copolymer from the viewpoint of light diffusibility.

The propylene-based block copolymer is preferably one which has a propylene-based polymer component and an ethylene-propylene copolymer component.

In a propylene-based block copolymer having a propylene-based polymer component and an ethylene-propylene copolymer component, the content of the propylene-based polymer component relative to the total of the propylene-based polymer component and the ethylene-propylene copolymer component is preferably 30% by mass or more, preferably 35% by mass or more, and even more preferably 40% by mass or more, from the viewpoints of mechanical properties and rigidity. On the other hand, the content of the propylene-based polymer component relative to the total of the propylene-based polymer component and the ethylene-propylene copolymer component is preferably 99% by mass or less, more preferably 97% by mass or less, and even more preferably 95% by mass or less, from the viewpoint of impact resistance.

In the above mentioned propylene-based block copolymer having the propylene-based polymer component and ethylene-propylene copolymer component, the content of propylene units in the propylene-based polymer component is preferably 90% by mass or more, more preferably 95% by mass or more, even more preferably 97% by mass or more, and particularly preferably 100% by mass, from the viewpoints of mechanical properties and rigidity.

The content of ethylene units in the ethylene-propylene copolymer component constituting the propylene-based block copolymer is preferably 31% by mass or more, more preferably 35% by mass or more, and even more preferably 40% by mass or more, from the viewpoint of light diffusibility. On the other hand, the content of ethylene units in the ethylene-propylene copolymer component is preferably 70% by mass or less, more preferably 65% by mass or less, and even more preferably 60% by mass or less, from the viewpoint of impact resistance.

An example of the propylene-based block copolymer having the propylene-based polymer component and the ethylene-propylene copolymer component is a propylene-based block copolymer obtained by polymerizing a propylene homopolymer in the first step and then polymerizing a propylene-ethylene copolymer in the second step.

The crystal melting peak temperature of the propylene-based block copolymer is preferably 155°C or higher and lower than 175°C. Propylene-based block copolymers having a crystal melting peak temperature within the above range contain sufficient crystal components, and therefore they impart good heat resistance, mechanical properties, and light diffusibility. About the effect on light diffusibility, it is as follows. Since there is a difference in refractive index between the crystalline portion and the amorphous portion contained in the propylene-based block copolymer, generally, the more crystalline portions there are, the more light diffusion occurs inside the propylene-based block copolymer, and the light diffusibility tend to be higher. From this viewpoint, the crystal melting peak temperature of the propylene-based block copolymer is preferably 160°C or higher. On the other hand, although the upper limit of the crystal melting peak temperature of the propylene-based block copolymer is not particularly limited, the upper limit is usually 170°C or lower. A propylene-based block copolymer satisfying such a crystalline melting peak temperature may contain a filler such as talc and the like or a known nucleating agent, if necessary.

The crystalline melting peak temperature of a propylene-based block copolymer can be measured by the following method according to JIS K7121.

The melting behavior of the propylene-based block copolymer is measured by carrying out the following steps (1) to (3) in order using a differential scanning calorimeter (DSC6220 manufactured by SSI NanoTechnology Inc.). In each step, the time is plotted on the horizontal axis and the heat of fusion is plotted on the vertical axis to obtain a melting curve, and the peak top of the peak observed in step (3) is taken as the crystal melting peak temperature.
Step (1): 5 mg of a sample is heated from room temperature to 40°C and then to 200°C at a rate of 10°C/min, and held for 3 minutes after the temperature increase is complete, the sample is held for 3 minutes.
Step (2): The temperature is lowered from 200°C to 40°C at a rate of 10°C/min, and after the temperature decrease is complete, the sample is held for 3 minutes.
Step (3): The temperature is raised from 40°C to 200°C at a rate of 10°C/min.

For producing the propylene-based brock copolymer, various polymerization methods known in the related art in which a known catalyst for polymerization of olefins is used may be used. For example, a multi-stage polymerization method using a Ziegler-Natta catalyst can be mentioned. As the multi-stage polymerization method, a slurry polymerization method, a solution polymerization method, a bulk polymerization method, a gas phase polymerization method, or the like can be used, and two or more of these methods may be combined.

Examples of producing method of the propylene homopolymer include known polymerization methods such as a slurry polymerization method, a solution polymerization method, a bulk polymerization method, or a gas phase polymerization method, using a known Ziegler-Natta catalyst or a known complex catalyst such as a metallocene complex or a non-metallocene complex.

Although the melt flow rate (MFR) of the propylene-based polymer of the present invention is not limited, it is usually 0.1 g/min or more, and from the viewpoint of the appearance of the molded article, it is preferably 10 g/10 min or more, more preferably 20 g/10 min or more, and even more preferably 25 g/10 min or more. It is usually 200 g/10 min or less, and from the viewpoint of tensile strength, it is preferably 150 g/10 min or less, and more preferably 100 g/10 min or less.

The melt flow rate of the propylene-based polymer is measured according to JIS K7210 (1999) under the conditions of a measurement temperature of 230°C and a measurement load of 21.18 N.

The propylene-based polymer used in the thermoplastic elastomer composition of the present invention may be a commercially available product. The propylene-based copolymer can be procured from the manufacturers listed below, and can be selected as appropriate.

Examples of the commercially available product include Prim Polypro (registered trademark) manufactured by Prime Polymer Co., Ltd., Sumitomo Noblen (registered trademark) manufactured by Sumitomo Chemical Co., Ltd., propylene-based polymer manufactured by SunAllomer Co., Ltd., Novatec (registered trademark) PP and WINTEC (registered trademark) manufactured by Japan Polypropylene Corporation, Moplen (registered trademark) and Adflex (registered trademark) manufactured by Lyondell Basell, ExxonMobil PP manufactured by ExxonMobil, Formolene (registered trademark) manufactured by Formosa Plastics, Borealis PP manufactured by Borealis, SEETEC PP manufactured by LG Chemical, ASI POLYPROPYLENE manufactured by A. Schulman, INEOS PP manufactured by INEOS Olefins & Polymers, Braskem PP manufactured by Braskem, Hanwha Total Petrochemical Random PP manufactured by Hanwha Total, Sabic (registered trademark) PP manufactured by Sabic, TOTAL PETROCHEMICALS Polypropylene manufactured by TOTAL PETROCHEMICALS, and YUPLENE (registered trademark) manufactured by SK.

The thermoplastic elastomer composition of the present invention may contain only one type of propylene-based copolymer, or may contain two or more types having different monomer compositions, physical properties and the like.

### <Elastomer>

A publicly known elastomer can be used as the elastomer. From the viewpoints of low-temperature impact resistance and high-temperature strength, it is preferable that the elastomer contains at least one selected from the group consisting of styrene-based elastomers and ethylene-α-olefin copolymers, and it is more preferable that the elastomer contains a styrene-based elastomer.

### <Styrene-based elastomer>

The styrene-based elastomer used in the thermoplastic elastomer composition of the present invention preferably has a glass transition temperature in the range of -65°C or higher and -45°C or lower. When the styrene-based elastomer has two or more glass transition temperatures, at least one of the glass transition temperatures may be in the range of -65°C or higher and -45°C or lower. A combination of the styrene-based elastomer having a glass transition temperature in the range of -65°C or higher and -45°C or lower with a propylene-based copolymer makes it possible to obtain a thermoplastic elastomer composition having appropriate light transmittance, and excellent low-temperature impact resistance and high-temperature strength.

From the viewpoint of low-temperature impact resistance, the glass transition temperature of the styrene-based elastomer is more preferably in the range of -65°C or higher and -50°C or lower.

The glass transition temperature of a styrene-based elastomer is measured by the DSC method.

When two or more types of styrene-based elastomer are used, the glass transition temperature of each styrene-based elastomer may be within or outside the above mentioned glass transition temperature range. It is sufficient that at least one glass transition temperature of the styrene-based elastomer is preferably present in the range of -65°C or higher and -45°C or lower, more preferably in the range of -65°C or higher and -50°C or lower.

Specifically, the styrene-based elastomer used in the present invention may be a hydrogenated styrene-conjugated diene block copolymer.

The styrene-based elastomer used in the present invention preferably has a styrene unit content of 20% by mass or more and 35% by mass or less from the viewpoints of low-temperature impact resistance, high-temperature strength, and light transmittance.

The styrene unit content of the styrene-based elastomer is more preferably 21% by mass or more from the viewpoint of strength and heat resistance. The styrene unit content of the styrene-based elastomer is more preferably 30% by mass or less from the viewpoints of flexibility and impact resistance, and even more preferably 28% by mass or less, and particularly preferably 25% by mass or less.

Here, the styrene unit content is the content of styrene units derived from the raw material styrene and introduced into the hydrogenated product of the styrene-conjugated diene block copolymer. The styrene unit content of the styrene-based elastomer can be calculated by performing proton NMR measurement with a nuclear magnetic resonance apparatus and quantifying the characteristic groups of styrene.

The styrene unit content when using two or more types of styrene-based elastomers can also be calculated by proportional calculation from the styrene unit content of each styrene-based elastomer and the blending mass ratio of each styrene-based elastomer. In this case, the styrene unit content of each styrene-based elastomer may be within or outside the preferred range of the styrene unit content described above. It suffices that the total styrene unit content of the styrene-based elastomer calculated by proportional calculation is within the preferred range of the above-described styrene unit content.

For example, when a hydrogenated product of a styrene-conjugated diene block copolymer (b1) having a styrene unit content of 10% by mass or more and 15% by mass or less, and a hydrogenated product of a styrene-conjugated diene block copolymer (b2) having a styrene unit content of 25% by mass or more and 35% by mass or less are used in combination as styrene-based elastomers, so that the styrene unit content is 20% by mass or more and 35% by mass or less, particularly 20% by mass or more and 25% by mass or less, it becomes easier to achieve both high-temperature strength and low-temperature impact resistance, as well as light transmittance. Preferably the hydrogenated product of the styrene-conjugated diene block copolymer (b1) and the hydrogenated product of the styrene-conjugated diene block copolymer (b2) are hydrogenated styrene-conjugated diene-styrene block copolymers, respectively.

A suitable conjugated diene in the hydrogenated product of the styrene-conjugated diene block copolymer as the styrene-based elastomer is butadiene, isoprene or a mixture thereof. Examples of hydrogenated styrene-conjugated diene block copolymers include hydrogenated styrene-butadiene block copolymers (hereinafter sometimes simply abbreviated as "SEBS").

By using a hydrogenated product of a styrene-conjugated diene block copolymer as a styrene-based elastomer, it is possible to maintain good light resistance of the thermoplastic elastomer composition having appropriate visible light and ultraviolet transmittance better than when a polymer having a double bond in the molecular structure such as styrene-butadiene-styrene block copolymer (SBS) is used as a styrene-based elastomer.

In addition, a thermoplastic elastomer composition having excellent low-temperature impact resistance and high-temperature strength, and appropriate light transmittance can be obtained by using a combination of the above mentioned propylene-based copolymer and a hydrogenated product of a styrene-conjugated diene block copolymer having a styrene unit content of 20% by mass or more and 35% by mass or less, and particularly 20% by mass or more and 25% by mass or less, and a glass transition temperature in the range of -65°C or higher and -45°C or lower.

The styrene-based elastomer used in the present invention is preferably a linear styrene-based elastomer. A linear styrene-based elastomer can be easily dispersed in a propylene-based copolymer, and light transmittance can be easily adjusted.

Here, the linear styrene-based elastomer is, for example, a hydrogenated product of a styrene-conjugated diene block copolymer in which the conjugated diene portion is butadiene, isoprene, or a mixture thereof. Specifically, the linear styrene-based elastomer is a styrene-ethylenebutylene-styrene copolymer, which is a hydrogenated product of a styrene-butadiene block copolymer.

The hydrogenated product by the styrene-conjugated diene block copolymer as the styrene-based elastomer preferably has a 1,2-microstructure of 60 mol% or less, and more preferably 45 mol% or less, as analyzed by the NMR method. Those having a 1,2-microstructure of 60 mol % or less are preferable from the viewpoint of moldability and flexibility.

From the viewpoint of weather resistance, the hydrogenation rate of the hydrogenated product of the styrene-conjugated diene block copolymer as the styrene elastomer is preferably 90 mol % or more, and more preferably 95 mol % or more.

The mass average molecular weight (Mw) of the styrene-based elastomer is preferably 40,000 or more, more preferably 45,000 or more, and even more preferably 48,000 or more, from the viewpoint of releasability.

From the viewpoint of low-temperature impact resistance, the mass average molecular weight (Mw) of the styrene-based elastomer is preferably 400,000 or less, more preferably 300,000 or less, and even more preferably 250,000 or less.

The mass average molecular weight (Mw) of a styrene-based elastomer is measured by gel permeation chromatography method (GPC method), and can be measured, for example, under the following conditions.
Instrument: "HLC-8220 GPC (R)" manufactured by Tosoh Corporation
Column: "TSKgel Super HM-M (6.0 mm ID×15 cm×2 + G)" manufactured by Tosoh Corporation
Detector: Differential refractive index detector (RI/built-in)
Solvent: chloroform
Temperature: 40°C
Flow rate: 0.25 mL/min
Injection volume: 0.1% by mass x 20 µL
Calibration sample: monodisperse polystyrene
Calibration method: polystyrene conversion
Calibration curve approximation formula: cubic formula (hyperbola): Exclusion limit setting time 12 minutes

When using two or more types of styrene-based elastomer, the weight average molecular weight of the styrene-based elastomer can be obtained by measuring a mixture of each component of the styrene-based elastomer by the above mentioned GPC method. In this case, the weight average molecular weight of each styrene-based elastomer may be within or outside the above mentioned preferred range of the weight average molecular weight of the styrene-based elastomer, so long as a mixture of the styrene-based elastomers has the weight average molecular weight of the styrene-based elastomer within the above mentioned preferred range.

Examples of a method for producing the styrene-based elastomer include a method in which a styrene-conjugated diene block copolymer is synthesized in an inert solvent using a lithium catalyst according to the method described in JP S40-23798B, and then hydrogenates it in an inert solvent in the presence of hydrogenation catalyst according to the method described in JP S42-8704B, JP S43-6636B, JP S59-133203A, and JP S60-79005A.

Styrene-based elastomers are also available as commercial products. Examples of commercially available styrene-based elastomers include "Kraton (registered trademark) G" manufactured by Kraton Polymer Co., Ltd., "Septon (registered trademark)" manufactured by Kuraray Co., Ltd., and "Tuftec (registered trademark)" manufactured by Asahi Kasei Corporation.

The thermoplastic elastomer composition of the present invention may contain only one type of styrene-based elastomer, or may contain two or more types having different monomer compositions and physical properties.

### <Ethylene-α-Olefin Copolymer>

From the viewpoint of light diffusibility, ethylene-α-olefin copolymers such as ethylene-α-olefin random copolymers and ethylene-α-olefin block copolymers can be preferably used as the elastomer of the thermoplastic elastomer composition of the present invention.

Examples of the ethylene-α-olefin copolymer include one that has a structural unit comprising α-olefin units such as propylene, 1-butene, 2-methylpropylene, 1-pentene, 3-methyl-1-butene, 1-hexene, 4-methyl-1-pentene, or 1-octene. The α-olefin is preferably an α-olefin having 4 or more and 8 or less carbon atoms and having a carbon-carbon double bond at the terminal carbon atom, such as propylene, 1-butene, 1-hexene and 1-octene. The ethylene-α-olefin copolymer may be obtained by copolymerizing only one kind of α-olefin with ethylene, or by copolymerizing two or more kinds of α-olefins with ethylene.

The ethylene unit content of the ethylene-α-olefin copolymer is preferably high in order to prevent fusion due to blocking of the ethylene-α-olefin copolymer. The ethylene unit content of the ethylene-α-olefin copolymer is preferably low in terms of low-temperature impact resistance when the thermoplastic elastomer composition of the present invention is molded. Specifically, the lower limit of the ethylene unit content of the ethylene-α-olefin copolymer is usually 50% by mass or more, preferably 55% by mass or more, more preferably 60% by mass or more, and even more preferably 65% by mass or more with respect to the total 100% by mass of the ethylene units and α-olefin units. On the other hand, the upper limit of the ethylene unit content of the ethylene-α-olefin copolymer is usually 99% by mass or less, and preferably 80% by mass or less.

The ethylene unit content, the α-olefin unit content, and the later-described non-conjugated diene unit content in the ethylene-α-olefin copolymer can be determined by infrared spectroscopy.

In addition to ethylene units and α-olefin units, the ethylene-α-olefin copolymer may have other monomer units such as monomer units based on a non-conjugated diene (non-conjugated diene units). Examples of the non-conjugated dienes include chain non-conjugated dienes such as **1,4-**hexadiene, 1,6-octadiene, 2-methyl-1,5-hexadiene, 6-methyl-1,5-heptadiene, and 7-methyl-1,6-octadiene; and cyclic non-conjugated dienes such as cyclohexadiene, dicyclopentadiene, methyltetrahydroindene, 5-vinylnorbornene, 5-ethylidene-2-norbornene, 5-methylene-2-norbornene, 5-isopropylidene-2-norbornene, 6-chloromethyl-5-isopropenyl-2-norbornene, and the like. The non-conjugated diene is preferably 5-ethylidene-2-norbornene or dicyclopentadiene.

When the ethylene-α-olefin copolymer has other monomer units such as non-conjugated diene units, the content thereof is usually 10% by mass or less, preferably 5% by mass or less with respect to 100% by mass of the entire ethylene-α-olefin copolymer.

Although the melt flow rate (MFR) of the ethylene-α-olefin copolymer is not limited, it is usually 10 g/10 min or less, and from the viewpoint of strength, it is preferably 8.0 g/10 min or less, more preferably 5.0 g/10 min or less, and even more preferably 3.0 g/10 min or less. The melt flow rate of the ethylene-α-olefin copolymer is usually 0.01 g/10 min or more, and from the viewpoint of fluidity, it is preferably 0.05 g/10 min or more, and more preferably 0.10 g/10 min or more.

The melt flow rate of the ethylene-α-olefin copolymer is measured according to ASTM D1238 under conditions of a measurement temperature of 190°C and a measurement load of 21.18N.

From the viewpoint of low-temperature impact resistance, the density of the ethylene-α-olefin copolymer is preferably 0.88 g/cm³ or less. On the other hand, from the viewpoints of transparency and refractive index, the density of the ethylene-α-olefin copolymer is preferably 0.86 g/cm³ or more.

The density of the ethylene-α-olefin copolymer can be measured by ISO 1183-A method (measurement temperature: 23°C).

The ethylene-α-olefin copolymer is also available as a commercial product. Examples of the commercially available products corresponding to ethylene-α-olefin copolymers include, "Engage (registered trademark)" and "INFUSE (registered trademark)" manufactured by Dow Chemical Company, "Solumer (registered trademark)" manufactured by SK Corporation, "LUCENE (registered trademark)" manufactured by LG Chemical Company, "Tafmer (registered trademark)" and "Mitsui EPT" manufactured by Mitsui Chemicals, Inc., "DYNARON (registered trademark)" manufactured by ENEOS Materials Corporation, "KEP-070P" manufactured by Kmuho Polychem, "Vistamaxx (registered trademark)" manufactured by ExxonMobil Chemical Company, and the like.

The thermoplastic elastomer composition of the present invention may contain only one type of ethylene-α-olefin copolymer, or may contain two or more types having different monomer compositions, physical properties, and the like.

### <Preferred Combination of Propylene-based Polymer and Elastomer>

From the viewpoint of light diffusibility, a preferred combination of the propylene-based polymer and the elastomer is one in which the propylene-based polymer is the propylene-based block copolymer and the elastomer is the ethylene-α-olefin copolymer, and more preferably, a combination of the propylene-based block copolymer having the propylene-based polymer block having a propylene content of 90% by mass or more and 100% by mass or less and an ethylene-propylene copolymer block having an ethylene content of 31% by mass or more and 70% by mass or less, and an ethylene-α-olefin copolymer.

### <Colorant>

The thermoplastic elastomer composition of the present invention contains a colorant. By containing a colorant, the resulting airbag housing cover is able to make transmitted white light more noticeable than an airbag housing cover that does not contain a colorant, which has the effect of making it easier for the human eye to distinguish.

The colorant may be either an organic pigment or an inorganic pigment. Since colorants have a light shielding property, the light transmittance can be adjusted by the amount of colorant added. In general, inorganic pigments have a stronger light shielding property, while organic pigments have a weaker light shielding property. As the organic pigment and inorganic pigment, known colorants can be used.

Examples of organic pigments include cyanine green, cyanine blue, disazo yellow, disazopyrazolone orange, benzimidazolone, naphthol red, quinacridone red, quinacridone magenta, dioxazine violet, and the like.

Examples of inorganic pigments include carbon black, lamp black, titanium oxide, iron oxide yellow, iron oxide red, ultramarine blue, and the like.

These colorants may be used alone or in combination of two or more. That is, one organic pigment may be used alone or in combination of two or more organic pigments. One inorganic pigment may be used alone or in combination of two or more inorganic pigments. Furthermore, one or more organic pigments may be used in combination with one or more inorganic pigments.

### <Crystal Nucleating Agent>

The thermoplastic elastomer composition of the present invention may contain a crystal nucleating agent. As the crystal nucleating agent, a diacetal-based crystal nucleating agent is preferable. By mixing a diacetal-based crystal nucleating agent, crystallization of the propylene-based copolymer is promoted, and it is expected that light transmittance is improved.

Any known diacetal crystal nucleating agent can be used. Examples of commercially available diacetal-based crystal nucleating agents include Gelol (registered trademark) D, Gelol (registered trademark) MD and Gelol (registered trademark) DXR manufactured by Shin Nippon Rika Co., Ltd., Mirad (registered trademark) 3988, Mirad (registered trademark) NX8000, Mirad (registered trademark) NX8000J, Mirad (registered trademark) NX8000K, and Mirad (registered trademark) NX8000ECO manufactured by Milliken Japan (USA), SIPAXNA-2 manufactured by GCHTECHNOLORY (China), and the like.

Only one of these may be used, or two or more of these may be used.

### <Blending Ratio>

The lower limit of the content of the elastomer relative to 100 parts by mass of the propylene-based polymer in the thermoplastic elastomer composition is preferably 45 parts by mass or more, more preferably 60 parts by mass or more, and even more preferably 80 parts by mass or more, from the viewpoint of low-temperature impact resistance.

On the other hand, the upper limit of the content of the elastomer relative to 100 parts by mass of the propylene-based polymer in the thermoplastic elastomer composition is preferably 250 parts by mass or less, more preferably 220 parts by mass or less, and even more preferably 200 parts by mass or less, from the viewpoint of high-temperature strength.

When the styrene-based elastomer is contained as the elastomer, the lower limit of the content of the styrene-based elastomer relative to 100 parts by mass of the propylene-based polymer is preferably 45 parts by mass or more, more preferably 60 parts by mass or more, and even more preferably 80 parts by mass or more, from the viewpoint of low-temperature impact resistance. On the other hand, the upper limit of the content of the styrene-based elastomer relative to 100 parts by mass of the propylene-based polymer is preferably 250 parts by mass or less, more preferably 220 parts by mass or less, and even more preferably 200 parts by mass or less, from the viewpoint of high-temperature strength.

When the ethylene-α-olefin copolymer is contained as the elastomer, the lower limit of the content of the ethylene-α-olefin copolymer relative to 100 parts by mass of the propylene-based polymer is preferably 45 parts by mass or more, more preferably 60 parts by mass or more, and even more preferably 80 parts by mass or more, from the viewpoint of low-temperature impact resistance.

On the other hand, the upper limit of the content of the ethylene-α-olefin copolymer relative to 100 parts by mass of the propylene-based polymer is preferably 250 parts by mass or less, more preferably 220 parts by mass or less, and even more preferably 200 parts by mass or less, from the viewpoint of high-temperature strength.

When the styrene-based elastomer and the ethylene-α-olefin copolymer are used in combination as the elastomer, the lower limit of the content of the styrene-based elastomer relative to the total of the styrene-based elastomer and the ethylene-α-olefin copolymer is preferably 10% by mass or more, more preferably 20% by mass or more, and even more preferably 30% by mass or more. On the other hand, the upper limit of the content of the styrene-based elastomer relative to the total of the styrene-based elastomer and the ethylene-α-olefin copolymer is preferably 90% by mass or less, more preferably 85% by mass or less, and even more preferably 80% by mass or less.

The content of the colorant in the thermoplastic elastomer composition of the present invention can be as follows, depending on whether an organic pigment is used as the colorant, an inorganic pigment is used as the colorant, or a mixture of an organic pigment and an inorganic pigment is used as the colorant.

When the colorant is an organic pigment, from the viewpoint of appropriate shielding property, the content is preferably 0.01 parts by mass or more, more preferably 0.1 parts by mass or more, and even more preferably 0.2 parts by mass or more, relative to 100 parts by mass of the total of the propylene-based polymer and the elastomer. Although there is no limitation on the upper limit of the organic pigment content, it is generally 5 parts by mass or less.

When the colorant is an inorganic pigment, the content is preferably 0.001 parts by mass or more, more preferably 0.01 parts by mass or more, and even more preferably 0.03 parts by mass or more, relative to 100 parts by mass of the total of the propylene-based polymer and the elastomer. On the other hand, the content of the inorganic pigment is preferably 0.5 parts by mass or less, more preferably 0.3 parts by mass or less, and even more preferably 0.15 parts by mass or less.

When the colorant contains both an organic pigment and an inorganic pigment, the total content of the organic pigment and the inorganic pigment is preferably 0.001 parts by mass or more, more preferably 0.01 parts by mass or more, and even more preferably 0.03 parts by mass or more, relative to 100 parts by mass of the total of the propylene-based polymer and the elastomer. On the other hand, the total content of the organic pigment and the inorganic pigment is preferably 3 parts by mass or less, more preferably 1 part by mass or less, and even more preferably 0.5 parts by mass or less.

When an organic pigment and an inorganic pigment are used in combination, from the viewpoint of appropriate shielding property, it is preferable to use 10 to 5,000 parts by mass, and particularly preferable to use 30 to 3,000 parts by mass, of the organic pigment relative to 100 parts by mass of the inorganic pigment.

The total content of the propylene-based polymer, the elastomer, and the colorant in the entire thermoplastic elastomer composition of the present invention is preferably 80% by mass or more, more preferably 85% by mass or more, and even more preferably 90% by mass or more, from the viewpoint of effectively obtaining the desired light transmittance of the thermoplastic elastomer composition and furthermore the airbag housing cover while providing the properties required for the airbag housing cover, by containing the propylene-based polymer, the elastomer, and the colorant.

When the thermoplastic elastomer composition of the present invention contains the crystal nucleating agent, preferably the diacetal-based crystal nucleating agent, the content of the crystal nucleating agent in the thermoplastic elastomer composition of the present invention is preferably 0.05 parts by mass or more and 5.0 parts by mass or less, and more preferably 0.05 parts by mass or more and 1.0 parts by mass or less, relative to 100 parts by mass of the total of the propylene-based polymer and the elastomer.

### <Other Components>

The thermoplastic elastomer composition of the present invention may include other optional components for various purposes within a range that does not significantly impair the effects of the present invention, in addition to the propylene-based copolymer, styrene-based elastomer, ethylene-α-olefin copolymer, colorant, and crystal nucleating agent. Examples thereof include the following additives, inorganic fillers (excluding inorganic pigments), organic fillers, and polymers other than propylene-based polymers, styrene-based elastomers, and ethylene-α-olefin copolymers (hereinafter referred to as "other polymers").

Examples of the additives include, an antioxidant, a heat stabilizer, a light stabilizer, an ultraviolet absorber, a neutralizer, a lubricant, an anti-fogging agent, an antiblocking agent, a slip agent, a flame retardant, a dispersant, an antistatic agent, a conductivity-imparting agent, a metal deactivator, a molecular weight modifier, an antibacterial agent, a fluorescent brightening agent, a silicone oil, and the like. These additives can be blended in the range of usually 0.01 parts by mass or more and 2 parts by mass or less of each additive, relative to 100 parts by mass of the total of the propylene-based polymer and the elastomer.

Examples of the above other polymers that may be contained in the thermoplastic elastomer composition of the present invention include low-density polyethylene, polyester elastomer, polyurethane elastomer, polyester, polyamide, polyurethane, styrene polymer, polycarbonate, vinyl chloride polymer, various elastomers other than those mentioned above (excluding those corresponding to styrene-based elastomers and ethylene-α-olefin copolymers), and the like. The other polymers listed above may be contained alone or in combination of two or more kinds.

When the thermoplastic elastomer composition of the present invention contains other polymers, the content of the other polymer is preferably 20% by mass or less, more preferably 15% by mass or less, and even more preferably 10% by mass or less, based on the total of the thermoplastic elastomer composition in order to obtain sufficient effects of containing the propylene-based polymer, the elastomer, and the colorant.

### <Method for Producing Thermoplastic Elastomer Composition>

The thermoplastic elastomer composition of the present invention can be produced by kneading the propylene-based copolymer, the elastomer, the colorant, and optionally other components according to a conventional method using a conventional extruder, a Banbury mixer, a roll, a Brabender plastograph, a kneader Brabender, or the like. Among these producing methods, it is preferable to use an extruder, particularly a twin-screw extruder.

### <Physical Properties>

The thermoplastic elastomer composition of the present invention has the properties required for an airbag housing cover, and also has the desired appropriate light transmittance as a thermoplastic elastomer composition, and therefore as an airbag housing cover.

The thermoplastic elastomer composition of the present invention is preferably used for airbag housing covers. In the present invention, the "airbag housing cover" means a container in general for storing an airbag. For example, it means a container in which an airbag is housed, the container having an opening when the airbag deploys, or the entire container integrated with this opening.

In such applications, the thermoplastic elastomer composition of the present invention preferably has the following physical properties.

### (Total Light Transmittance)

From the viewpoint of visibility when a light is irradiated from the back of the molded article, the thermoplastic elastomer composition of the present invention preferably has a total light transmittance of 0.001% or more and 70% or less, more preferably 60% or less, even more preferably 50% or less, and particularly preferably 20% or less, measured according to JIS K7136-1 for a sheet-like test piece having a thickness of 1 mm, which is produced by injection molding the thermoplastic elastomer composition under conditions of a resin temperature of 200°C and a mold temperature of 40°C. By setting the total light transmittance of the thermoplastic elastomer composition of the present invention within such a numerical range, when the composition is used as an airbag housing cover, the light can be recognized without stress when a light is irradiated from the back.

### (Izod Impact Strength)

In the present invention, Izod impact strength at - 40°C, -45°C and -50°C according to ISO180 is used as an index of low-temperature impact resistance.

The molded article of the thermoplastic elastomer composition of the present invention preferably has an Izod impact strength of 50 kJ/m² or more, more preferably 70 kJ/m² or more. Although the upper limit of the Izod impact strength of the thermoplastic elastomer composition of the present invention is not particularly limited, it is usually 150 kJ/m² or less.

### (MFR)

In the present invention, the melt flow rate (MFR) at a temperature of 230°C and a measurement load of 21.18N according to JIS K7210 (1999) is used as an index of injection moldability of the thermoplastic elastomer composition.

The thermoplastic elastomer composition of the present invention preferably has a melt flow rate of 1.0 g/10 min or more and 50 g/10 min or less in order to have excellent injection moldability. When the MFR of the thermoplastic elastomer composition for airbags is 1.0 g/10 min or more, the fluidity tends to be good. When the MFR of the thermoplastic elastomer composition for airbags is 50 g/10 min or less, burrs and the like during molding can be easily suppressed, which is preferred. From the viewpoint of fluidity, the MFR of the thermoplastic elastomer composition for airbags is more preferably 2.0 g/10 min or more, even more preferably 2.5 g/10 min or more. On the other hand, from the viewpoint of suppressing burrs and the like during injection molding, the MFR of the thermoplastic elastomer composition is more preferably 40 g/10 min or less, even more preferably 20 g/10 min or less, particularly preferably 17 g/10 min or less, and especially preferably 15 g/10 min or less.

### (Tensile Elongation at Break, Tensile Breaking Strength at Normal Temperature)

From the viewpoint of material strength, the thermoplastic elastomer composition of the present invention preferably has a tensile elongation at break at 23°C of 300% or more, more preferably 350% or more, according to JIS K6251. When the tensile elongation at break at 23°C is equal to or higher than the above lower limit, the expandability of the airbag housing cover made of the thermoplastic elastomer composition of the present invention tends to be good due to good elongation of the material. Although the upper limit of the tensile elongation at break of the thermoplastic elastomer composition of the present invention is not particularly limited, it is usually 1500% or less.

From the same viewpoint, the tensile breaking strength measured when measuring the tensile breaking elongation is preferably 10 MPa or more, more preferably 12 MPa or more. When the tensile breaking strength at 23°C is equal to or higher than the above lower limit, the expandability of the airbag housing cover made of the thermoplastic elastomer composition of the present invention tends to be good due to the high material strength. Although the upper limit of the tensile breaking strength of the thermoplastic elastomer composition of the present invention is not particularly limited, it is usually 25 MPa.

### (Tensile Breaking Strength at High Temperature)

From the viewpoint of material strength, the thermoplastic elastomer composition of the present invention preferably has a tensile breaking strength of 4.5 MPa or more at 85°C according to JIS K6251, more preferably 5.0 MPa or more, and even more preferably 5.5 MPa or more. When the tensile breaking strength at 85°C is equal to or higher than the above lower limit, the airbag housing cover made of the thermoplastic elastomer composition of the present invention tends to have good expandability due to high material strength. Although the upper limit of the tensile breaking strength of the thermoplastic elastomer composition of the present invention is not particularly limited, it is usually 8 MPa or less.

### (Flexural Modulus)

The thermoplastic elastomer composition of the present invention preferably has a flexural modulus of 600 MPa or less, particularly 200 MPa or more and 550 MPa or less, measured according to JIS K7203. When the flexural modulus of the thermoplastic elastomer composition is equal to or less than the upper limit, the low-temperature impact resistance tends to be excellent. When the flexural modulus of the thermoplastic elastomer composition is equal to or more than the lower limit, the rigidity tends to be excellent.

### (Light Diffusion Rate)

From the viewpoint of controlling the light diffusibility of the thermoplastic elastomer composition of the present invention, a composition that contains only the propylene-based polymer, the elastomer, and other components used as necessary, excluding only the colorant from the components of the thermoplastic elastomer composition (hereinafter, sometimes referred to as the "colorant-free composition"), has a light diffusion rate measured with reference to DIN 5036 of preferably 10% or more, more preferably 14% or more, even more preferably 20% or more, and particularly preferably 25% or more. Although there is no particular upper limit to the light diffusion rate of the colorant-free composition, it is preferably 95% or less.

Here, the light diffusion rate of the colorant-free composition (see DIN 5036) can be measured using a variable angle photometer GC5000L manufactured by Nippon Denshoku Industries Co., Ltd.

The calculation formula for the light diffusion rate is as follows. Light diffusion rate (%) = ((20° brightness value + 70° brightness value) / (5° brightness value x 2)) x 100

As described above, in order to realize such light diffusibility, a preferred combination of the propylene-based polymer and the elastomer composition is a combination in which the propylene-based polymer is the propylene-based block copolymer and the elastomer is the ethylene-α-olefin copolymer, and more preferably, a combination of the propylene-based block copolymer having the propylene-based polymer block having a propylene content of 90% by mass or more and 100% by mass or less and the ethylene-propylene copolymer block having an ethylene content of 31% by mass or more and 70% by mass or less, and the ethylene-α-olefin copolymer.

### <Molded Article such as Airbag Housing Cover>

Using the thermoplastic elastomer composition of the present invention, a molded article such as an airbag housing cover can be formed in general, using an ordinary injection molding method, or, if necessary, using various molding methods such as gas injection molding, injection compression molding, short shot foam molding or the like. In particular, it is preferable that the thermoplastic elastomer composition of the present invention is injection-molded into a molded article such as an airbag housing cover. Molding conditions for injection molding are as follows.

The molding temperature for injection molding the thermoplastic elastomer composition is usually 150°C or higher and 300°C or lower, and preferably 180°C or higher and 280°C or lower. The injection pressure is usually 5 MPa or more and 100 MPa or less, and preferably 10 MPa or more and 80 MPa or less. The mold temperature is usually 0°C or higher and 80°C or lower, and preferably 20°C or higher and 60°C or lower.

The average thickness of the design portion of the airbag housing cover of the present invention made of the thermoplastic elastomer composition of the present invention is generally 6 mm or less, preferably 5 mm or less, and more preferably 4 mm or less. The lower limit of the thickness is usually 0.5 mm or more, preferably 0.8 mm or more, and more preferably 1 mm or more. The airbag housing cover may have portions of various thicknesses, and there is no problem even if there is a portion having a thickness outside the above average thickness range.

When the thickness of the airbag housing cover is within the above suitable range, the effect of appropriate light transmittance by using the thermoplastic elastomer composition of the present invention can be more effectively obtained, which is preferable.

### <Thermoplastic Elastomer Composition for Airbag Housing Cover>

One embodiment of the thermoplastic elastomer composition of the present invention is a thermoplastic elastomer composition for an airbag housing cover that contains a propylene-based polymer, an elastomer, and a colorant, and has a total light transmittance of 0.001% or more and 70% or less as measured by the above mentioned method.

For the propylene-based polymer, the explanation of <propylene-based polymer> in the thermoplastic elastomer composition of the present invention is applied.

The elastomer is at least one selected from the group consisting of styrene-based elastomers and ethylene-α-olefin copolymers, and the explanations of <Elastomer>, <Styrene-based Elastomer>, and <Ethylene-α-Olefin Copolymer> in the thermoplastic elastomer composition of the present invention are applied.

The colorant is at least one selected from the group consisting of organic pigments and inorganic pigments. When the colorant is an organic pigment, it is preferably contained in an amount of 0.01 parts by mass or more and 5 parts by mass or less, when the colorant is an inorganic pigment, it is preferably contained in an amount of 0.001 parts by mass or more 0.5 parts by mass or less, and when the colorant contains an organic pigment and an inorganic pigment, it is preferably contained in an amount of 0.001 parts by mass or more 3 parts by mass or less in total of the organic pigment and the inorganic pigment, relative to 100 parts by mass of the total of the propylene-based polymer and the elastomer. For the colorant, the explanation of

### <Colorant> in the thermoplastic elastomer composition of the present invention is applied.

For the blending ratio and other detailed explanations in the thermoplastic elastomer composition for an airbag housing cover, the <Blending Ratio> and other explanations in the thermoplastic elastomer composition of the present invention are applied.

### <Composite Molded Article>

A composite molded article of the present invention having a first layer made of the thermoplastic elastomer composition for an airbag housing cover of the present invention and a second layer made of a resin film is suitable as an airbag housing cover.

Namely, the thermoplastic elastomer composition for an airbag housing cover of the present invention can be integrated with a resin film to form a composite molded article. The composite molded article having a first layer containing the thermoplastic elastomer composition for an airbag housing cover of the present invention and a second layer consisting of a resin film is suitable as an airbag housing cover.

By using such a composite molded article, it is possible to combine the resin film which has a touch panel operation function as well as design and an airbag housing cover.

Examples of resin films include polypropylene films, polyethylene films, polyolefin thermoplastic elastomer films, and polyester films.

The thickness of the resin film that forms the second layer is usually 3 mm or less, preferably 2 mm or less, more preferably 1.5 mm or less, and even more preferably 1 mm or less. Although there is no lower limit to the thickness of the resin film, it is usually 0.01 mm or more.

The thickness of the airbag housing cover of the present invention is as described above. In the airbag housing cover of the present invention, which is the composite molded article of the present invention having a first layer made of the thermoplastic elastomer composition for an airbag housing cover of the present invention and a second layer made of the above mentioned resin film, the thickness of the first layer is usually 6 mm or less, preferably 5 mm or less, and more preferably 4 mm or less, and is usually 0.5 mm or more, preferably 0.8 mm or more, and more preferably 1 mm or more.

When the thicknesses of the first layer and the second layer are within the above suitable ranges, the effect of appropriate light transmittance achieved by using the thermoplastic elastomer composition of the present invention can be more effectively obtained, which is preferable.

The composite molded article of the present invention can be molded by an insert molding method. In the insert molding method, a resin film is incorporated in a mold before molding, and then the mold is filled with the thermoplastic elastomer composition for an airbag housing cover of the present invention. By this method, a composite molded article of the present invention having a first layer made of the thermoplastic elastomer composition for an airbag housing cover of the present invention and a second layer made of a resin film can be obtained.

### <Uses>

The thermoplastic elastomer composition of the present invention is excellent in high-temperature strength and low-temperature impact resistance, and appropriate light transmittance, and is suitably used as a molding material for airbag housing covers. In particular, among these airbag housing covers, for example, it is suitable as an airbag housing cover for an airbag system that protects the occupants by inflating and deploying by sensing the impact or deformation when a high-speed moving body such as a car is involved in a collision or other accident.

In particular, due to its appropriate light transmission property, the airbag housing cover of the present invention is suitable as an airbag housing cover arranged at a visible position such as a touch panel display. Examples of visible positions include positions visible to the driver's seat occupant and the passenger in the front seat, and specifically include an instrument panel, a steering wheel, and a console panel.

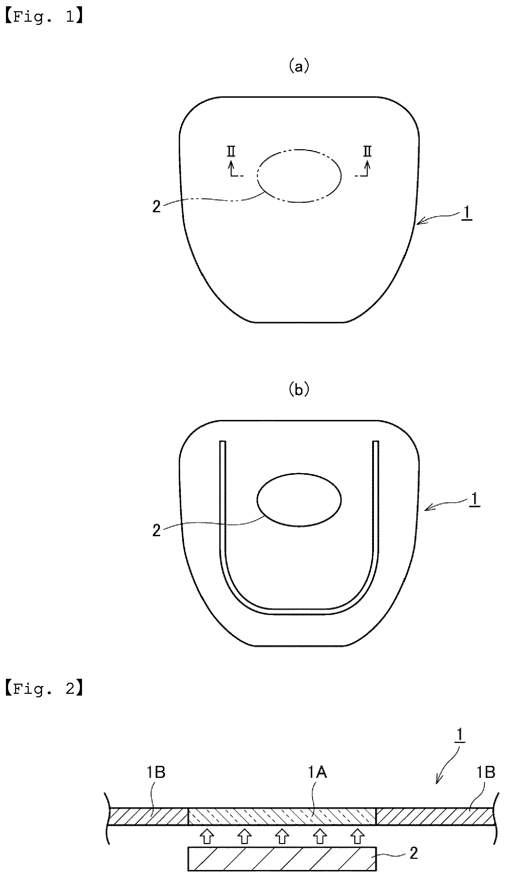

An example of an embodiment in which the thermoplastic elastomer composition of the present invention is applied to an airbag housing cover arranged at a visible position such as a touch panel display and the like will be described with reference to Figs. 1 and 2.

Fig. 1(a) is a schematic front view of an example of an airbag housing cover, and Fig. 1(b) is a rear view of the same. Fig. 2 is an enlarged view of the cross section along line II-II in Fig. 1(a).

The light source (LED module) 2 is provided on the rear side of the airbag housing cover 1. Light from this light source 2 (arrow in Fig. 2) must be transmitted through the airbag housing cover 1 and visible to the occupant. For this reason, the light-transmitting portion 1A of the airbag housing cover 1, which corresponds to the light source 2, is composed of at least the thermoplastic elastomer composition of the present invention.

The other portion 1B other than the light-transmitting portion 1A may be composed of the thermoplastic elastomer composition of the present invention, or may be composed of a conventional thermoplastic elastomer composition that does not have light transmittance.

In this way, by constructing at least the light-transmitting portion 1A of the airbag housing cover 1 facing the light source 2 from the thermoplastic elastomer composition of the present invention, it is possible to obtain good visibility while also obtaining appropriate internal concealment, even in an airbag housing cover equipped with a touch panel display.

### EXAMPLES

Now, specific embodiments of the present invention will be described in further detail with reference to examples. The present invention is not limited to the following examples as long as the present invention is within the gist thereof. The values of various production conditions and evaluation results in the following examples are to be understood as preferred upper or lower limit values of embodiments of the present invention, and preferred ranges may be a range defined by a combination of the upper or lower limit value and a value of an example described below or by a combination of values of examples described below.

### <Raw Materials>

### [Propylene-based Copolymer]

(A-1): Novatec (registered trademark) PP MG03E manufactured by Japan Polypropylene Corporation,
   Propylene-ethylene random copolymer
   MFR (JIS K7210 (1999)): 30 g/10min (measurement conditions: 230°C, a load of 21.1 N (2.16kgf))
   Crystal melting peak temperature: 146°C
   Propylene units content: 96% by mass
(A-2): Novatec (registered trademark) PP BC03B, manufactured by Japan Polypropylene Corporation
   Propylene-based block copolymer
   Propylene-based block copolymer obtained by polymerizing propylene homopolymer in the first step, followed by polymerizing ethylene-propylene copolymer in the second step
   MFR (JIS K7210 (1999)): 30 g/10min (measurement conditions: 230°C, a load of 21.18N (2.16kgf))
   Crystal melting peak Working temperature: 169°C
   Content of propylene homopolymer component: 84% by mass
   Content of ethylene-propylene copolymer component: 16% by mass
   Content of ethylene units in ethylene-propylene copolymer component: 55% by mass
(A-3): Novatec (registered trademark) PP MA3 manufactured by Japan Polypropylene Corporation
   Propylene homopolymer
   MFR (JIS K7210 (1999)): 11 g/10min (measurement conditions: 230°C, a load of 21.18N (2.16kgf))
   Crystal melting peak temperature: 159°C
   Propylene units content: 100% by mass
(A-4): Novatec (registered trademark) PP BC06NCA manufactured by Japan Polypropylene Corporation
   Propylene-based block copolymer
   Propylene-based block copolymer obtained by polymerizing propylene homopolymer in the first step, followed by polymerizing ethylene-propylene copolymer in the second step
   MFR (JIS K7210 (1999)): 60 g/10min (measurement conditions: 230°C, a load of 21.18N (2.16kgf))
   Crystal melting peak temperature: 164°C
   Content of propylene homopolymer component: 92% by mass
   Content of ethylene-propylene copolymer component: 8% by mass
   Ethylene units content in ethylene-propylene copolymer component: 46% by mass
(A-5): A mixture of the following propylene-based random copolymer (A-5-1) and the following propylene-based random block copolymer (A-5-2) in a ratio of (A-5-1): (A-5-2)=67% by mass:33% by mass based on the total of 100% by mass of the mixture of (A-5-1) and (A-5-2)
(A-5-1): WINTEC (registered trademark) WFX4M manufactured by Japan Polypropylene Corporation
   Propylene-ethylene random copolymer having an ethylene units content of 3.1% by mass
   MFR (JIS K7210 (1999)): 7 g/10min (measurement conditions: 230°C, a load of 21.18N (2.16kgf))
   Crystal melting peak temperature: 124°C
(A-5-2): Adflex (registered trademark) Q100F manufactured by Lyondell Basell
   Propylene-ethylene random block copolymer
   Propylene-ethylene random block copolymer obtained by polymerizing propylene-ethylene random copolymer in the first step, followed by polymerizing propylene-ethylene random copolymer in the second step
   MFR (JIS K7210 (1999)): 0.6 g/10min (measurement conditions: 230°C, a load of 21.18N (2.16kgf))
   Crystal melting peak temperature: 143°C
   Content of propylene-ethylene random copolymer obtained in the first step: 32.9% by mass
   Content of propylene-ethylene random copolymer component obtained in the second step: 67.1% by mass
   Content of ethylene units in propylene-ethylene random copolymer component obtained in the second step: 25.6% by mass

### [Styrene-Based Elastomer]

(B-1): Kraton (registered trademark) G1652 manufactured by Kraton Polymer Co., Ltd.
   Hydrogenated product of styrene-butadiene block copolymer (styrene-ethylene-butylene-styrene copolymer (SEBS))
   Mass average molecular weight (Mw): 70,000
   Styrene units content: 30% by mass
   Glass transition temperature: -55°C
(B-2): Kraton (registered trademark) G1657 manufactured by Kraton Polymer Co., Ltd.
   Hydrogenated product of styrene-butadiene block copolymer (styrene-ethylene-butylene-styrene copolymer (SEBS))
   Mass average molecular weight (Mw): 110,000
   Styrene units content: 13% by mass
   Glass transition temperature: -55°C

### [Ethylene-α-Olefin Copolymer]

(C-1): Engage (registered trademark) 8100 manufactured by Dow Chemical Company
   Ethylene-1-octene random copolymer
   MFR (ASTM D1238): 1 g/10min (measurement conditions 190°C, a load of 21.18N (2.16kgf))
   Density (ISO 1183-A method): 0.87 g/cm³ (measurement temperature: 23°C)
(C-2): Engage (registered trademark) XLT8677manufactured by Dow Chemical Company
   Ethylene-1-octene block copolymer
   Crystal melting peak temperature: 119°C
   Heat of crystal fusion: 37 J/g
   MFR (ASTM D1238): 0.5 g/10min (measurement conditions: 190°C, a load of 21.18N) (catalog value)
   Density (ASTM D792): 0.870 g/cm³ (catalog value)
(C-3): Mitsui EPT3092PM manufactured by Mitsui Chemicals, Inc.
   Ethylene-propylene-ethylidene norbornene copolymer
   Mooney viscosity ML (1+4) 125°C (ASTM D1646): 61 (catalog value)
   Ethylene units content (A STM D3900): 65% by mass (catalog value)
   Ethylidene norbornene units content (ASTM D6047): 4.6% by mass (catalog value)

### [Colorant]

### <Organic pigment>

(D-1): HCM1560 Green manufactured by Dainichiseika Color & Chemicals Mfg. Co., Ltd.
Cyanine green master batch
Pigment concentration in the master batch: 20% by mass
Carrier: Polyethylene

### <Inorganic pigment>

(D-2): Lamp Black 101 manufactured by ORION ENGINEERED CARBON Lamp black master batch
   Pigment concentration in the master batch: 40% by mass
   Carrier: Polyethylene
(D-3): PC40C manufactured by Dainichiseika Color & Chemicals Mfg. Co., Ltd.
   Carbon black master batch
   Pigment concentration in the master batch: 40% by mass
   Carrier: Polyethylene

### <Evaluation Method>

In the following evaluations 1) to 3) and 5) to 8), injection-molded test sheets obtained by injection molding of the pellets of the thermoplastic elastomer composition obtained in each Example with an in-line screw type injection molding machine (manufactured by Toshiba Machine Co., Ltd., "IS130") at an injection pressure of 50 MPa, a cylinder setting temperature of 190°C (a resin temperature of 200°C) and a mold temperature of 40°C were used for each test.

### 1) Total light transmittance

The total light transmittance was measured according to JIS K7136-1 for an injection-molded sheet with a thickness of 1 mm, a width of 100 mm, and a length of 100 mm.

### 2) Visibility evaluation when a light is irradiated from behind

A sensitivity evaluation of visibility was conducted on an injection molded sheet having a thickness of 1 mm, width of 100 mm, and length of 100 mm, by irradiating a light from the behind of the sheet. A hand light having an intensity of 19 lumens was used as the light source, and the sheet was placed 10 cm from the light source. A sensitivity test was carried out to check how the light was looked through the sheet, and the evaluation was based on the following criteria.
⊚: The light looks very comfortable.
○: The light looks moderately comfortable.
△: Within the acceptable range, but looks a little dazzling.
×A: Too dazzling to look directly.
×B: No light was transmitted at all.

### 3) Visual shielding of contents

A sensitivity evaluation was conducted on an injection molded sheet having a thickness of 3 mm, width of 100 mm, and length of 100 mm, to confirm whether the other side of the sheet was visible when looked through the sheet, and the evaluation was based on the following criteria.
⊚: The other side of the sheet was completely invisible.
○: The other side of the sheet was slightly visible.
△: The other side of the sheet was visible to some extent.
×: The other side of the sheet was completely visible.

### 4) Injection moldability: melt flow rate (MFR)

It was measured according to JIS K7210 (1999) under the conditions of a temperature of 230°C and a load of 21.18N.

### 5) Low temperature impact resistance: Izod impact strength

A notched test piece for Izod impact strength measurement having a thickness of 10 mm, a width of 4 mm, and a length of 80 mm was formed by the above injection molding. This test piece was measured at temperatures of - 40°C, -45°C, and -50°C according to ISO180 (2010). In the Izod impact test, "P" indicates non-destruction, "H" indicates that the test piece was almost destructed into two parts, but they were still integral through a thin section, and "C" indicates destruction. It was evaluated that the higher the value of Izod impact strength and the higher the value of non-destructive "P", the better the low-temperature impact resistance.

### 6) Flexural modulus (23°C)

Flexural modulus was measured according to JIS K7203 under the conditions of a span of 64 mm and a bending speed of 1 mm/min.

### 7) Normal temperature tensile breaking elongation/tensile breaking strength (23°C) : Tensile breaking test (JIS-3 dumbbell, tensile speed 500 mm / min)

A test piece was prepared by punching out a sheet for a tensile test (2 mm thick×120 mm wide×80 mm long sheet) according to JIS K6251 (JIS-3 dumbbell) . The tensile breaking elongation and tensile breaking strength of this punched test piece were measured in an atmosphere of 23°C according to JIS K6251. It was evaluated that the larger the values of tensile elongation at break and tensile strength at break, the better.

### 8) High temperature tensile breaking strength (85 °C.): Tensile breaking test (JIS-3 dumbbell, tensile speed 500 mm / min) (unit: %)

A test piece was prepared by punching out a sheet for a tensile test (2 mm thick×120 mm wide×80 mm long sheet) according to JIS K6251 (JIS-3 dumbbell) . The tensile breaking strength of this punched test piece was measured in an atmosphere of 85°C according to JIS K6251. The larger the value of the tensile breaking strength, the better the evaluation.

In Tables-1 to 4 below, the numerical value of the tensile breaking strength at 85°C with a mark of ">" indicates that the measured strength reached the upper limit of the measuring apparatus, and the test piece and did not break. The values refer to the stress which was the upper limit of the measuring apparatus, and this stress can be equated with the breaking stress in this evaluation.

### <Examples/Comparative Examples>

### [Example 1]

As shown in Table 1, in addition to 100 parts by mass of (A-1), 50 parts by mass of (B-1), 50 parts by mass of (B-2), and 0.5 parts by mass of (D-1); 0.4 parts by mass of a diacetal-based crystal nucleating agent (Millad (registered trademark) NX8000 manufactured by Milliken Japan), 0.15 parts by mass of an antioxidant (Irgastab (registered trademark) FS301FF manufactured by BASF Japan), 0.2 parts by mass of a light stabilizer (HALS SABOSTAB (registered trademark) UV119 manufactured by SONGWON), 0.1 parts by mass of an ultraviolet absorbing agent (Tinuvin (registered trademark) 326 manufactured by BASF Japan) and 0.2 parts by mass of silicone oil (KF96-100CS manufactured by Shin-Etsu Chemical Co., Ltd.) were mixed for the total of 100 parts by mass of the propylene-based polymer and the elastomer, and blended for 1 minute in a Henschel mixer. The blended material was charged into a co-directional twin-screw extruder ("TEM-26SS" manufactured by Toshiba Machine Co., Ltd., L/D = 48.5, number of cylinder blocks: 12) at a rate of 25 kg/h, and the temperature was raised in the range of 160°C or higher and 210°C or lower to perform melt-kneading to produce pellets of a thermoplastic elastomer composition.

The evaluations 1) to 8) above were performed on the obtained pellets of the thermoplastic elastomer composition. These evaluation results are shown in Table-1.

### [Examples 2 to 29 and Comparative Examples 1 to 15]

Pellets of the thermoplastic elastomer composition were obtained in the same manner as in Example 1, except that the blending ratio was changed as shown in Tables-1 to 5. The diacetal-based crystal nucleating agent, antioxidant, light stabilizer, ultraviolet absorber, and silicone oil were blended in the same manner as in Example 1.

The evaluations 1) to 8) above were performed on the obtained pellets of the thermoplastic elastomer composition. These evaluation results are shown in Tables-1 to 5.

In the evaluation results columns in Tables-1 to 5, "-" indicates that no evaluation was performed and there is no data.

In Tables-1 to 5, the pigment concentration in the thermoplastic elastomer composition refers to the pigment content based on 100 parts by mass of the total of the propylene-based polymer and the elastomer.

### [Table 1]

**<Table-1>**

| | | | | Example | | | | | | | | | | |
|---|---|---|---|---|---|---|---|---|---|---|---|---|---|---|
| | | | | 1 | 2 | 3 | 4 | 5 | 6 | 7 | 8 | 9 | 10 | 11 |
| Raw material composition | Propylene-based random copolymer | A-1 | parts by mass | 100 | 100 | 100 | 100 | 100 | 100 | 100 | 100 | 100 | 100 | 100 |
| | Styrene-based elastomer | B-1 | parts by mass | 50 | 50 | 50 | 50 | 50 | 50 | 50 | 50 | 50 | 50 | 50 |
| | | B-2 | parts by mass | 50 | 50 | 50 | 50 | 50 | 50 | 50 | 50 | 50 | 50 | 50 |
| Pigment | Cyanine greenx master batch (Pigment concentration 20%) | D-1 | parts by mass | 0.5 | 1 | 2.5 | 5 | | | | | | | |
| | Black master batch (Pigment concentration 40%) | D-2 | parts by mass | | | | | 0.075 | 0.125 | 0.25 | 0.5 | 0.75 | | |
| | | D-3 | parts by mass | | | | | | | | | | 0.075 | 0.125 |
| Pigment concentration in thermoplastic elastomer composition | | | parts by mass | 0.1 | 0.2 | 0.5 | 1 | 0.03 | 0.05 | 0.1 | 0.2 | 0.3 | 0.03 | 0.05 |
| Evaluation results | Total light transmittance | | % | 35.9 | 19.1 | 12.0 | 2.10 | 26.9 | 15.1 | 2.02 | 0.03 | 0.01 | 5.66 | 0.76 |
| | Visibility when light is irradiated from bihind | | | Δ | ○ | ○ | ⊚ | Δ | ○ | ⊚ | ⊚ | ⊚ | ○ | ⊚ |
| | Visual shielding of contents | | | Δ | ○ | ⊚ | ⊚ | ⊚ | ⊚ | ⊚ | ⊚ | ⊚ | ⊚ | ⊚ |
| | MFR | | g/10 min | - | - | 13 | 13 | - | - | 13 | 13 | - | - | 13 |
| | Izod impact strength (-40°C) | | kJ/cm² | - | - | 93(P) | 93(P) | - | - | 92(P) | 92(P) | - | - | 91(P) |
| | Izod impact strength (-45°C) | | kJ/cm² | - | - | 85(P) | 91(P) | - | - | 85(P) | 90(P) | - | - | 85(P) |
| | Izod impact strength (-50°C) | | kJ/cm² | - | - | 68(P) | 72(P) | - | - | 68(P) | 62(H) | - | - | 60(H) |
| | Flexural modulus (23°C) | | MPa | - | - | 310 | 308 | - | - | 310 | 320 | - | - | 330 |
| | Tensile breaking strength (23°C) | | MPa | - | - | 14 | 14 | - | - | 13 | 14 | - | - | 14 |
| | Tensile breaking elongation (23°C) | | % | - | - | 650 | 630 | - | - | 670 | 630 | - | - | 620 |
| | Tensile breaking strength (85°C) | | MPa | - | - | 6.0 | 5.8 | - | - | 5.6 | 5.8 | - | - | 5.7 |

### [Table 2]

**<Table-2>**

| | | | | Example | | | |
|---|---|---|---|---|---|---|---|
| | | | | 12 | 13 | 14 | 15 |
| Raw material composition | Propylene-based random copolymer | A-1 | parts by mass | 100 | 100 | 100 | 100 |
| | Styrene-based elastomer | B-1 | parts by mass | 50 | 50 | | |
| | | B-2 | parts by mass | 50 | | | |
| | Ethylene-*α*-olefin copolymer | C-1 | parts by mass | | 50 | 100 | |
| | | C-2 | parts by mass | | | | 100 |
| Pigment | Black master batch (Pigment concentration 40%) | D-2 | parts by mass | | 0.25 | 0.25 | 0.25 |
| | | D-3 | parts by mass | 0.25 | | | |
| Pigment concentration in thermoplastic elastomer composition | | | parts by mass | 0.1 | 0.1 | 0.1 | 0.1 |
| Evaluation results | Total light transmittance | | % | 0.01 | 2.47 | 0.95 | 2.70 |
| | Visibility when light is irradiated from bihind | | | ⊚ | ⊚ | ⊚ | ⊚ |
| | Visual shielding of contents | | | ⊚ | ⊚ | ⊚ | ⊚ |
| | MFR | | g/10 min | 13 | 12 | 13 | 9 |
| | Izod impact strength (-40°C) | | kJ/cm² | 92(P) | 81(P) | 81(P) | 78(P) |
| | Izod impact strength (-45°C) | | kJ/cm² | 83(P) | 59(P) | 71(P) | 84(P) |
| | Izod impact strength (-50°C) | | kJ/cm² | 66(P) | 35(C) | 58(P) | 75(P) |
| | Flexural modulus (23°C) | | MPa | 315 | 302 | 335 | 280 |
| | Tensile breaking strength (23°C) | | MPa | 14 | 15 | 16 | 15 |
| | Tensile breaking elongation (23°C) | | % | 690 | 620 | 720 | 950 |
| | Tensile breaking strength (85°C) | | MPa | 5.5 | 5.8 | 4.2 | 6.2 |

### [Table 3]

**<Table-3>**

| | | | | Comparative Example | | | | | | |
|---|---|---|---|---|---|---|---|---|---|---|
| | | | | 1 | 2 | 3 | 4 | 5 | 6 | 7 |
| Raw material composition | Propylene-based random copolymer | A-1 | parts by mass | 100 | 100 | 100 | 100 | 100 | 100 | 100 |
| | Styrene-based elastomer | B-1 | parts by mass | 50 | 50 | | 50 | 50 | 50 | 50 |
| | | B-2 | parts by mass | 50 | | | 50 | 50 | 50 | 50 |
| | Ethylene-*α*-olefin copolymer | C-1 | parts by mass | | 50 | 100 | | | | |
| Pigment | Black master batch (Pigment concentration 40%) | D-2 | parts by mass | | | | 1 | 1.25 | 1.5 | |
| | | D-3 | parts by mass | | | | | | | 0.5 |
| Pigment concentration in thermoplastic elastomer composition | | | parts by mass | 0 | 0 | 0 | 0.4 | 0.5 | 0.6 | 0.2 |
| Evaluation results | Total light transmittance | | % | 83.5 | 79.5 | 73.6 | 0 | 0 | 0 | 0 |
| | Visibility when light is irradiated from bihind | | | ×A | ×A | ×A | ×B | ×B | ×B | ×B |
| | Visual shielding of contents | | | × | × | △ | ⊚ | ⊚ | ⊚ | ⊚ |
| | MFR | | g/10 min | 13 | 12 | 13 | - | - | - | - |
| | Izod impact strength (-40°C) | | kJ/cm² | 90(P) | 80(P) | 80(P) | - | - | - | - |
| | Izod impact strength (-45°C) | | kJ/cm² | 86(P) | 65(P) | 73(P) | - | - | - | - |
| | Izod impact strength (-50°C) | | kJ/cm² | 62(P) | 30(C) | 54(P) | - | - | - | - |
| | Flexural modulus (23°C) | | MPa | 322 | 304 | 327 | - | - | - | - |
| | Tensile breaking strength (23°C) | | MPa | 13 | 14 | 14 | - | - | - | - |
| | Tensile breaking elongation (23°C) | | % | 700 | 680 | 810 | - | - | - | - |
| | Tensile breaking strength (85°C) | | MPa | 5.8 | 5.8 | 4.2 | - | - | - | - |

### [Table 4]

**<Table-4>**

| | | | | Example | | | | | | | Comparative Example | | | | |
|---|---|---|---|---|---|---|---|---|---|---|---|---|---|---|---|
| | | | | 16 | 17 | 18 | 19 | 20 | 21 | 22 | 8 | 9 | 10 | 11 | 12 |
| Raw material composition | Propylen-based block copolymer | A-2 | parts by mass | 100 | 100 | 100 | 100 | 100 | 100 | 100 | 100 | 100 | 100 | | |
| | Propylen-based block copolymer | A-4 | parts by mass | | | | | | | | | | | 100 | 100 |
| | Styrene-based elastomer | B-1 | parts by mass | 50 | 50 | 50 | 50 | 50 | 50 | 50 | 50 | 50 | 50 | | |
| | | B-2 | parts by mass | 50 | 50 | 50 | 50 | 50 | 50 | 50 | 50 | 50 | 50 | | |
| | Ethylene-*α*-olefin copolymer | C-3 | parts by mass | | | | | | | | | | | 150 | 150 |
| Pigment | Cyanine greenx master batch (Pigment concentration 20%) | D-1 | parts by mass | 0.5 | 5 | | | | | | | | | | |
| | Black master batch (Pigment concentration 40%) | D-2 | parts by mass | | | 0.075 | 0.25 | 0.5 | | | | 1.5 | | 1 | |
| | | D-3 | parts by mass | | | | | | 0.075 | 0.25 | | | 0.5 | | 1 |
| Pigment concentration in thermoplastic elastomer composition | | | parts by mass | 0.1 | 1 | 0.03 | 0.1 | 0.2 | 0.03 | 0.1 | 0 | 0.6 | 0.2 | 0.16 | 0.16 |
| Evaluation results | Total light transmittance | | % | 27.7 | 3.90 | 20.1 | 1.43 | 0.07 | 0.94 | 0.01 | 79.5 | 0 | 0 | 0 | 0 |
| | Visibility when light is irradiated from bihind | | | Δ | ⊚ | Δ | ⊚ | ⊚ | ⊚ | ⊚ | ×A | ×B | ×B | ×B | ×B |
| | Visual shielding of contents | | | ○ | ⊚ | ⊚ | ⊚ | ⊚ | ⊚ | ⊚ | Δ | ⊚ | ⊚ | ⊚ | ⊚ |
| | MFR | | g/10 min | - | 13 | - | 13 | 13 | - | 13 | - | - | - | - | - |
| | Izod impact strength (-40°C) | | kJ/cm² | - | 99(P) | - | 99(P) | 101(P) | - | 99(P) | - | - | - | - | - |
| | Izod impact strength (-45°C) | | kJ/cm² | - | 100(P) | - | 103(P) | 98(P) | - | 100(P) | - | - | - | - | - |
| | Izod impact strength (-50°C) | | kJ/cm² | - | 89(P) | - | 95(P) | 91(P) | - | 91(P) | - | - | - | - | - |
| | Flexural modulus (23°C) | | MPa | - | 390 | - | 344 | 400 | - | 400 | - | - | - | - | - |
| | Tensile breaking strength (23°C) | | MPa | - | 12 | - | 12 | 13 | - | 12 | - | - | - | - | - |
| | Tensile breaking elongation (23°C) | | % | - | 610 | - | 580 | 600 | - | 600 | - | - | - | - | - |
| | Tensile breaking strength (85°C) | | MPa | - | 3.7 | - | 3.9 | 3.8 | - | 4.0 | - | - | - | - | - |

### [Table 5]

**<Table-5>**

| | | | | Example | | | | | | | Comparative Example | | |
|---|---|---|---|---|---|---|---|---|---|---|---|---|---|
| | | | | 23 | 24 | 25 | 26 | 27 | 28 | 29 | 13 | 14 | 15 |
| Raw material composition | Propylene homopolymer | A-3 | parts by mass | 100 | 100 | 100 | 100 | 100 | 100 | 100 | 100 | 100 | 100 |
| | Styrene-based elastomer | B-1 | parts by mass | 50 | 50 | 50 | 50 | 50 | 50 | 50 | 50 | 50 | 50 |
| | | B-2 | parts by mass | 50 | 50 | 50 | 50 | 50 | 50 | 50 | 50 | 50 | 50 |
| Pigment | Cyanine greenx master batch (Pigment concentration 20%) | D-1 | parts by mass | 0.5 | 5 | | | | | | | | |
| | Black master batch (Pigment concentration 40%) | D-2 | parts by mass | | | 0.075 | 0.25 | 0.5 | | | | 1.5 | |
| | | D-3 | parts by mass | | | | | | 0.075 | 0.25 | | | 0.5 |
| Pigment concentration in thermoplastic elastomer composition | | | parts by mass | 0.1 | 1 | 0.03 | 0.1 | 0.2 | 0.03 | 0.1 | 0 | 0.6 | 0.2 |
| Evaluation results | Total light transmittance | | % | 27.7 | 6.20 | 17.0 | 3.05 | 0.05 | 1.03 | 0.01 | 82.3 | 0 | 0 |
| | Visibility when light is irradiated from bihind | | | Δ | ○ | Δ | ⊚ | ⊚ | ⊚ | ⊚ | ×A | ×B | ×B |
| | Visual shielding of contents | | | Δ | ⊚ | ⊚ | ⊚ | ⊚ | ⊚ | ⊚ | × | ⊚ | ⊚ |
| | MFR | | g/10 min | - | - | - | 8 | - | - | - | - | - | - |
| | Izod impact strength (-40°C) | | kJ/cm² | - | - | - | 83(P) | - | - | - | - | - | - |
| | Izod impact strength (-45°C) | | kJ/cm² | - | - | - | 76(P) | - | - | - | - | - | - |
| | Izod impact strength (-50°C) | | kJ/cm² | - | - | - | 53(P) | - | - | - | - | - | - |
| | Flexural modulus (23°C) | | MPa | - | - | - | 512 | - | - | - | - | - | - |
| | Tensile breaking strength (23°C) | | MPa | - | - | - | 17 | - | - | - | - | - | - |
| | Tensile breaking elongation (23°C) | | % | - | - | - | 630 | - | - | - | - | - | - |
| | Tensile breaking strength (85°C) | | MPa | - | - | - | 7.1 | - | - | - | - | - | - |

### [Evaluation Results]

Examples 1 to 29, which are within the scope of the thermoplastic elastomer composition of the present invention, had good high-temperature strength, low-temperature impact resistance, and visibility.

Comparative Examples 1 to 3, 8, and 13 were formulations that did not contain pigments, and they transmitted too much light and were rated as being too dazzling in the visibility evaluation.

Comparative Examples 4 to 7, 9 to 12, and 14 to 15 had a total light transmittance of 0, so they were rated as being unable to recognize the light even when irradiated from the back.

### [Example 30]

A composite molded article was prepared by insert molding using pellets of the thermoplastic elastomer composition obtained in Example 7 and a polypropylene film.

Specifically, Novatec (registered trademark) PP MG03E manufactured by Japan Polypropylene Co., Ltd. was pressed to a thickness of 0.5 mm, cut into 100 mm squares, set in a mold of 100 mm×100 mm×3 mm, and injected the pellets.

By this method, a composite molded article was obtained in which the first layer made of the thermoplastic elastomer composition and the second layer made of the polypropylene film were fused and integrated. The total light transmittance of this composite was 0.05%, and in a visibility evaluation when a light was irradiated from behind, the light looked very comfortable, resulting in a rating of "⊚".

### [Experimental Examples 1-9: Experiments on Light Diffusibillity]

In order to confirm the effect of components other than colorants on visibility, experiments were conducted to confirm the effect on light diffusibility and visibility of the combination of components shown in Table 6. Pellets of a thermoplastic elastomer composition (colorant-free composition) were obtained in the same manner as in Example 1, except that no pigment was used and the composition shown in Table 6 was used. The diacetal-based crystal nucleating agent, antioxidant, light stabilizer, ultraviolet absorber, and silicone oil were blended in the same manner as in Example 1.

The evaluations 1) to 3) above were performed on the obtained pellets of the thermoplastic elastomer composition, and the light diffusion rates (reference to DIN 5036) of the obtained pellets were measured using a variable angle photometer GC5000L manufactured by Nippon Denshoku Industries Co., Ltd. These evaluation results are shown in Tables-6.

The calculation formula for the light diffusion rate is as follows. Light diffusion rate (%) = ((20° brightness value + 70° brightness value) / (5° brightness value x 2)) x 100

**[Table 6]**

| | | | | Experimental Example 1 | Experimental Example 2 | Experimental Example 3 | Experimental Example 4 | Experimental Example **5** | Experimental Example 6 | Experimental Example 7 | Experimental Example 8 | Experimental Example 9 |
|---|---|---|---|---|---|---|---|---|---|---|---|---|
| Raw material composition | Propylene-based random copolymer | A-1 | parts by mass | 100 | 100 | 100 | | | | | | |
| | Propylene-based block copolymer | A-2 | parts by mass | | | | 100 | 100 | 100 | | | |
| | Propylene-based random copolymer | A-5 | parts by mass | | | | | | | 100 | 100 | 100 |
| | Styrene-based elastomer | B-1 | parts by mass | 50 | | | 50 | | | 50 | | |
| | | B-2 | parts by mass | 50 | | | 50 | | | 50 | | |
| | Ethylene-*α*-olefin copolymer | C-1 | parts by mass | | 100 | | | 100 | | | 100 | |
| | | C-2 | parts by mass | | | 100 | | | 100 | | | 100 |
| Evaluation results | Total light transmittance | | % | 85.80 | 75.30 | 75.10 | 79.80 | 70.80 | 67.60 | 84.60 | 78.20 | 76.60 |
| | Visibility when light is irradiated from bihind | | | ×A | ○ | Δ | Δ | ○ | ⊚ | ×A | ×A | ×A |
| | Visual shielding of contents | | | × | ○ | Δ | Δ | ○ | ⊚ | × | × | Δ |
| | Light diffusion rate | | % | 6.0 | 41.6 | 14.4 | 17.1 | 21.6 | 38.5 | 4.8 | 9.3 | 6.6 |

From the results in Table-6, the following can be seen.

Experimental Example 1 and Experimental Examples 7 to 9 all had low light diffusion rates.

When the light diffusion rate is low like this, the light from the light source is transmitted in a straight line, which means that the visibility is too bright and the shape of the light source is directly visible, which was evaluated as poor in design.

Experimental Examples 2 to 6 all had higher light diffusion rates than Experimental Example 1 and Experimental Examples 7 to 9. When the light diffusion rate is high like this, the light from the light source is diffused and does not transmitted in a straight line, so that glare is suppressed in terms of visibility, and the shape of the light source is not visible, so that the design is also excellent.

From the above experimental results, it was confirmed that the light diffusion rate tends to be high and the visibility evaluation tends to be good by using a propylene-based block copolymer as the propylene-based copolymer, using an ethylene-α-olefin copolymer as the elastomer, or combining a propylene-based block copolymer as the propylene-based copolymer with an ethylene-α-olefin copolymer as the elastomer.

Although the present invention has been described in detail with reference to particular embodiments, it will be apparent to those skilled in the art that various changes may be made thereto without departing from the spirit and scope of the present invention.

The present application is based on Japanese Patent Application No. 2022-204498 filed on December 21, 2022, which is herein incorporated in its entirety by reference.

### Reference Signs List

1 Airbag housing cover
2 Light source (LED module)

## Claims

1. An airbag housing cover made of a thermoplastic elastomer composition comprising a propylene-based polymer, an elastomer, and a colorant,
wherein the thermoplastic elastomer composition has a total light transmittance of 0.001% or more and 70% or less as measured by the following method.
<Method of measuring the total light transmittance>
The thermoplastic elastomer composition is injection molded under conditions of a resin temperature of 200°C and a mold temperature of 40°C to produce a sheet-like test piece having a thickness of 1 mm. The total light transmittance of the test piece is measured according to JIS K7136-1.

2. The airbag housing cover according to claim 1, wherein the thermoplastic elastomer composition has an Izod impact strength at -40°C according to ISO180 of 50 kJ/m² or more.

3. The airbag housing cover according to claim 1 or 2, wherein the thermoplastic elastomer composition comprises a propylene-based block copolymer as the propylene-based polymer.

4. The airbag housing cover according to claim 3, wherein the propylene-based block copolymer has a propylene-based polymer component and an ethylene-propylene copolymer component.

5. The airbag housing cover according to claim 1 or 2, wherein the airbag housing cover is for being arranged at a visible position.

6. The airbag housing cover according to claim 5, wherein the airbag housing cover is for being arranged on an instrument panel, a steering wheel, or a console panel.

7. The airbag housing cover according to claim 1 or 2, wherein the thermoplastic elastomer composition comprises at least one selected from the group consisting of a styrene-based elastomer and an ethylene-α-olefin copolymer as the elastomer.

8. The airbag housing cover according to claim 7, wherein the thermoplastic elastomer composition comprises the styrene-based elastomer as the elastomer.

9. The airbag housing cover according to claim 8, wherein the styrene-based elastomer comprises a hydrogenated product of a styrene-conjugated diene block copolymer (b1) having a styrene unit content of 10% by mass or more and 15% by mass or less, and a hydrogenated product of a styrene-conjugated diene block copolymer (b2) having a styrene unit content of 25% by mass or more and 35% by mass or less.

10. The airbag housing cover according to claim 8 or 9, wherein the styrene-based elastomer has a glass transition temperature of -65°C or higher and -45°C or lower.

11. The airbag housing cover according to claim 7, wherein the thermoplastic elastomer composition comprises the ethylene-α-olefin copolymer as the elastomer.

12. The airbag housing cover according to claim 1 or 2, wherein the colorant is at least one selected from the group consisting of an organic pigment and an inorganic pigment.

13. The airbag housing cover according to claim 12, wherein the thermoplastic elastomer composition comprises 0.01 parts by mass or more and 5 parts by mass or less of the organic pigment as the colorant relative to 100 parts by mass of the total of the propylene-based polymer and the elastomer.

14. The airbag housing cover according to claim 12, wherein the thermoplastic elastomer composition comprises 0.001 parts by mass or more and 0.5 parts by mass or less of the inorganic pigment as the colorant relative to 100 parts by mass of the total of the propylene-based polymer and the elastomer.

15. The airbag housing cover according to claim 12, wherein the thermoplastic elastomer composition comprises 0.001 parts by mass or more and 3 parts by mass or less of the organic pigment and the inorganic pigment in total as the colorant relative to 100 parts by mass of the propylene-based polymer and the elastomer in total.

16. The airbag housing cover according to claim 1 or 2, wherein the thermoplastic elastomer composition has a melt flow rate of 1.0g/10min or more and 50g/10min or less at a temperature of 230°C and a measurement load of 21.18N according to JIS K7210 (1999).

17. The airbag housing cover according to claim 1 or 2, wherein the thermoplastic elastomer composition comprises the elastomer in an amount of 45 parts by mass or more and 250 parts by mass or less relative to 100 parts by mass of the propylene-based copolymer.

18. The airbag housing cover according to claim 1 or 2, wherein the thermoplastic elastomer composition has the total light transmittance of 0.001% or more and 20% or less.

19. A thermoplastic elastomer composition for an airbag housing cover comprising a propylene-based polymer, an elastomer, and a colorant,
wherein the elastomer is at least one selected from the group consisting of a styrene-based elastomer and an ethylene-α-olefin copolymer,
the colorant is at least one selected from the group consisting of an organic pigment and an inorganic pigment, and
the thermoplastic elastomer composition has a total light transmittance of 0.001% or more and 70% or less measured by the following method.
<Method of measuring the total light transmittance>
The thermoplastic elastomer composition is injection molded under conditions of a resin temperature of 200°C and a mold temperature of 40°C to produce a sheet-like test piece having a thickness of 1 mm. The total light transmittance of the test piece is measured according to JIS K7136-1.

20. The thermoplastic elastomer composition for an airbag housing cover according to claim 19, comprising 0.01 parts by mass or more and 5 parts by mass or less of the organic pigment as the colorant relative to 100 parts by mass of the total of the propylene-based polymer and the elastomer.

21. The thermoplastic elastomer composition for an airbag housing cover according to claim 19, comprising 0.001 parts by mass or more and 0.5 parts by mass or less of the inorganic pigment as the colorant relative to 100 parts by mass of the total of the propylene-based polymer and the elastomer.

22. The thermoplastic elastomer composition for an airbag housing cover according to claim 19, comprising 0.001 parts by mass or more and 3 parts by mass or less of the organic pigment and the inorganic pigment in total as the colorant relative to 100 parts by mass of the propylene-based polymer and the elastomer in total.

23. The thermoplastic elastomer composition for an airbag housing cover according to claim 19, comprising the styrene-based elastomer as the elastomer.

24. The thermoplastic elastomer composition for an airbag housing cover according to claim 23, wherein the styrene-based elastomer comprises a hydrogenated product of a styrene-conjugated diene block copolymer (b1) having a styrene unit content of 10% by mass or more and 15% by mass or less, and a hydrogenated product of a styrene-conjugated diene block copolymer (b2) having a styrene unit content of 25% by mass or more and 35% by mass or less.

25. The thermoplastic elastomer composition for an airbag housing cover according to claim 23 or 24, wherein the styrene-based elastomer has a glass transition temperature of -65°C or higher and -45°C or lower.

26. The thermoplastic elastomer composition for an airbag housing cover according to claim 19, wherein the propylene-based polymer comprises the propylene-based block copolymer.

27. The thermoplastic elastomer composition for an airbag housing cover according to claim 26, wherein the propylene-based block copolymer has a propylene-based polymer component and an ethylene-propylene copolymer component.

28. The thermoplastic elastomer composition for an airbag housing cover according to claim 19, wherein the elastomer comprises the ethylene-α-olefin copolymer.

29. A molded article made of the thermoplastic elastomer composition according to claim 19 or 26.

30. A composite molded article having a first layer containing the thermoplastic elastomer composition according to claim 19 or 26 and a second layer made of a resin film.

31. The composite molded article according to claim 30, wherein the composite molded article is an airbag housing cover.
